# EUROPEAN PATENT APPLICATION

(11) **EP 3 312 987 A1**
(43) Date of publication of application: **25.04.2018**
(21) Application number: 16465553.2
(22) Date of filing: 20.10.2016
(51) Int. Cl.: H02P 21/05, H02P 21/20

(54) **DEVICE AND METHOD FOR CONTROLLING A MULTIPHASE MOTOR FOR A VEHICLE**

(71) Applicant: Continental Automotive GmbH, 30165 Hannover (DE)
(72) Inventor: Ipatiov, Alexandru, 700285 Iasi (RO); Andrici, Ciprian, 700214 Iasi (RO); Irimia, Nicolae Daniel, 700333 Iasi (RO)

(57) **Abstract**

The present invention relates to a device (100) for controlling a multiphase motor for a vehicle, the device (100) is configured to be coupled to a converter, the device comprising: a sensor (10), which is configured to detect a converter failure and to provide a fault signal in case the converter failure is detected; and a processor (20), which is configured to generate a command vector used for controlling the multiphase motor and which is configured to receive the fault signal sent by the sensor (10) and which is configured to adjust the generated command vector based on the received fault signal.

## Description

### FIELD OF THE INVENTION

The present invention relates to the field of power electronics for controlling electric motors. Particularly, the present invention relates to a device and a method for controlling a multiphase motor for a vehicle.

### BACKGROUND OF THE INVENTION

The known architectures of a safety relevant system which uses electrical motors for automotive applications provide that a failure in the system will be treated by deactivating parts of the power electronics used for controlling electric motors.

### SUMMARY OF THE INVENTION

There may be a need to improve device and methods for controlling a multiphase motor for a vehicle.

These needs are met by the subject-matter of the independent claims. Further exemplary embodiments are evident from the dependent claims and the following description.

An aspect of the present invention relates to a device for controlling a multiphase motor for a vehicle, the device is configured to be coupled to a converter, the device comprising: a sensor, which is configured to detect a converter failure and to provide a fault signal in case the converter failure is detected; and a processor, which is configured to generate a command vector used for controlling the multiphase motor and which is configured to receive the fault signal sent by the sensor and which is configured to adjust the generated command vector based on the received fault signal.

In other words, the proposed approach addresses normal and fault compensated regimes for safety relevant two phase or multiphase motor control applications.

The present invention proposes a new motor control strategy for safety relevant systems that are using two phase or multiphase electric motors.

Safety relevant applications require the evaluation of the safe state of the system to be an operating mode without an unreasonable level of risk.

Using the present control algorithm according to the present invention, the range can be diminished, where or over which the unsafe state of the motor system is defined as off and understood as deactivated.

The present invention advantageously provides the ability to overcome inserted failures in different condition tests.

The present invention advantageously provides the use of low current shut off paths, before the power converter block, hence providing lower costs.

The present invention advantageously provides enhanced assistance in fault operation regimes compared to current state of the art.

The present invention advantageously provides independent current control on each stator phase winding.

The present invention advantageously provides that mutual inductance between stator phases is negligible.

The present invention advantageously provides the capability of one phase operation.

The present invention advantageously provides the capability of operating with different supply voltage rails for the two phases.

According to an exemplary embodiment of the present invention, a motor control algorithm is provided and it may be provided that the power converters are separated from the control block by a low current shut-off path.

As an option, according to an exemplary embodiment of the present invention, the modified motor control strategy offers the possibility to operate in a hybrid mode which would simultaneously nullify the effect of the failure which occurred in the system and still provide partial assistance.

This compensating or hybrid mode offers the possibility to ramp assistance down in case of failures or even provide a minimum tunable level of assistance for limp mode.

The present invention advantageously may be used for electrical motors for electronic power steering, EPS, or may be used for any field using electric motor drives.

According to an exemplary embodiment of the present invention, a control block is represented by a new motor control algorithm using at least two shut off paths, for instance shut off path 1 and shutoff path 2 sequentially run are implemented as a set of logic level, low current, deactivation paths.

The present invention advantageously may be used for power converters represented by a two phase inverters. The electric motor may be represented by a two phase brushless DC motor, BLDC, or permanent magnet synchronous motor, PMSM.

For example, in case of failure of the power converter or the motor, a safe state is provided by implementing modified control strategy able to compensate the effect of the failures in combination with low current shutoff paths.

A further, second aspect of the present invention relates to a method for controlling a multiphase motor for a vehicle, the method comprising the following steps of: detecting a converter failure and providing a fault signal in case the converter failure is detected; and generating a command vector used for controlling the multiphase motor and receiving the fault signal and adjusting the generated command vector based on the received fault signal.

According to an exemplary embodiment of the present invention, the sensor is configured to provide the fault signal comprising torque balancing information about a reduced torque generation of the multiphase motor due to the converter failure.

According to an exemplary embodiment of the present invention, the processor is configured to adjust the generated command vector based on the received fault signal and based on the received torque balancing information.

The term "torque balancing information" as used by the present invention refers to information that is used to calculate the countermeasure or the failure compensating adjusted torque generation, in the event of converter failures, with the resulting effect of braking torque generation, the countermeasure is now to generate opposite command vectors based on the torque balancing information to nullify the effect of the failures and to provide a similar feeling as if the system would be in the off state.

According to an exemplary embodiment of the present invention, the processor is configured to adjust the generated command vector based on the received fault signal and based on the received torque balancing information using a torque generation model of the multiphase motor.

According to an exemplary embodiment of the present invention, the processor is configured to provide at least two shut off paths for the converter based on the received fault signal.

According to an exemplary embodiment of the present invention, the processor is configured to provide the at least two shut off paths in terms of two shut off paths sequentially executed.

According to an exemplary embodiment of the present invention, the processor is configured to provide the at least two shut off paths in terms of two low current shut off paths.

According to an exemplary embodiment of the present invention, the sensor is configured to detect the converter failure in terms of a +DC-link-failure of operating conditions. The detected converter or motor failures might be any failure in general. The stuck-at +DC-link failure is just an example, but the algorithm is also capable of handling also stuck-at GND failures, short-circuit between phases failures or open phase failures. The term "sensor" as used by the present invention may refer to a sensing device or to a device providing derivate or auxiliary information in terms of an interface.

According to an exemplary embodiment of the present invention, the device is configured to control a two phase motor as the multiphase motor.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows the sketch of an architecture configuration for explaining the present invention;
- Fig. 2: shows the sketch of an another architecture configuration for explaining the present invention;
- Fig. 3: shows a schematic diagram of un-adjusted, e.g. fault uncompensated regime, command vectors according to an exemplary embodiment of the present invention;
- Fig. 4: shows a schematic sketch of an architecture configuration according to an exemplary embodiment of the present invention;
- Fig. 5: shows a schematic diagram of the SVM control vector strategy for two phases motor in fault compensated operation according to an exemplary embodiment of the present invention;
- Fig. 6: shows a schematic diagram of the device for controlling a multiphase motor for a vehicle according to an exemplary embodiment of the present invention; and
- Fig. 7: shows another sketch of the method for controlling a multiphase motor for a vehicle according to an exemplary embodiment of the present invention.

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

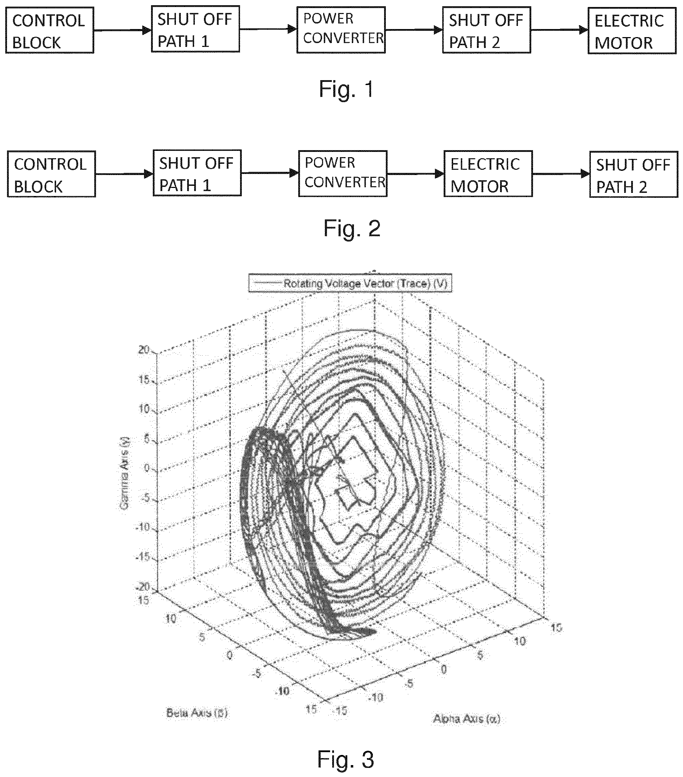

Fig. 1 shows the sketch of an architecture configuration for explaining the present invention.

Fig. 2 shows the sketch of another architecture configuration for explaining the present invention.

In Fig. 1 and Fig. 2 both show known architectures for safety applications. In addition, the power converters are separated from each other as they can be supplied from separate supply lines. The electric motor is, for instance, connected to the second high-current shutoff path enabling the interruption of the motor current flow.

The motor control algorithm and the power converter are separated by a low current shutoff path.

The electric motor is for instance connected to the second high-current shutoff path, which enables the interruption of the motor current flow.

Fig. 3 shows a schematic diagram of un-adjusted command vectors according to an exemplary embodiment of the present invention.

Fig. 3 shows a schematic diagram of voltage space vector traces within the (α, β, γ) planes.

The present approach of treating failures without deactivating the system implies the use of an architecture using a fault tolerant reconfigurable architecture by using from the beginning an un-adjusted strategy - fault uncompensated regime - of command vectors for the electric motor as shown in Fig. 3.

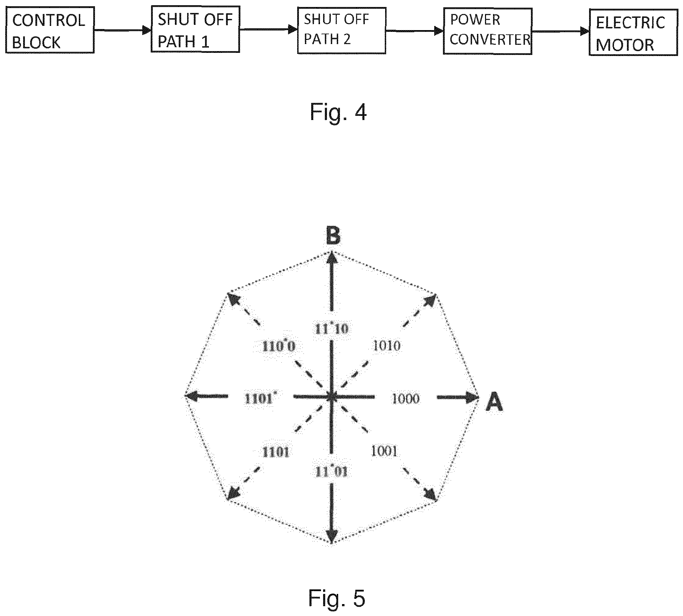

Fig. 4 shows a schematic architecture chart for the algorithm according to an exemplary embodiment of the present invention.

As shown in Fig. 4, the low current shut off paths are implemented on the low power side, e.g. before the power converter block having the advantage of lower costs.

The present method advantageously provides increasing the system availability by treating failures without deactivating the system and implies the use of a fault tolerant and reconfigurable architecture combined with a compensation motor control strategy.

Thus, failure in torque generation is compensated by adjusted command vectors in order to nullify the effect of the failure which occurred in the system and still provide partial torque generation, e.g. partial assistance if implemented in an electric motor of a steering assistance system.

Fig. 5 shows a schematic diagram of the SVM control vector strategy for two phases motor in normal mode operation according to an exemplary embodiment of the present invention.

The space vector modulation, SVM, strategy for a two phase motor in winding stuck at +DC Link failure operating conditions is presented in Fig. 5.

For instance, in adjusted mode operation, the control vectors of the motor can be seen in Fig. 5.

The correspondence of the markings in Fig. 5 is the following: 1 means the corresponding winding is connected to positive potential and 0 means the corresponding winding is connected to negative potential.

The allocation of the phases to the markings on the vectors is in the following order: AB. In particular, the marking is four digits long and the abstraction is AA'BB', where X and X' represent the two terminals of a phase and 0 and 1 represent the connection of the corresponding terminal to GND or +DC-link potential.

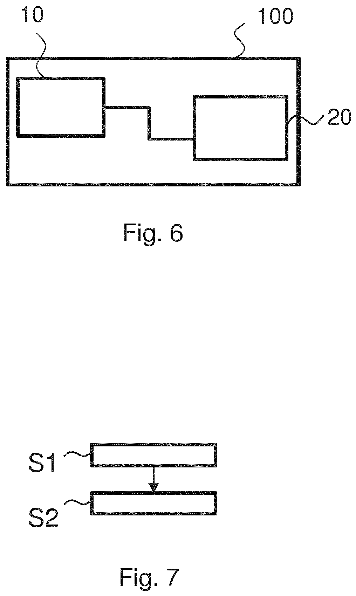

Fig. 6. shows a schematic diagram of the device for controlling a multiphase motor for a vehicle according to an exemplary embodiment of the present invention.

The device 100 may comprise a sensor 10 and a processor 20.

The sensor 10 is configured to detect a converter failure and to provide a fault signal in case the converter failure is detected.

The term "sensor" as used by the present invention may relate to a device configured to perform a fault detection and provide the fault detection information to the algorithm for further processing. The sensor may also be an interface device configured to provide and perform a fault detection by processing information of other data networks or sensors of the vehicle.

The processor 20 is configured to generate a command vector used for controlling the multiphase motor and which is configured to receive the fault signal sent by the sensor 10 and which is configured to adjust the generated command vector based on the received fault signal.

In the event of converter failures, with the resulting effect of braking torque generation, the countermeasure as calculated by the processor 20 based on the fault signal is now to generate opposite command vectors to nullify the effect of the failures and to provide a similar feeling as if the system would be in the off state.

Optionally the new motor control concept supports the provision of assistance by use of the remaining unaffected command vectors. This would fit to a limp mode of the system. For this purpose, a two phase motor is beneficial.

According to an exemplary embodiment of the present invention, the processor 20 may be for instance configured to adjust the generated command vector based on the received fault signal and based on the received torque balancing information using a torque generation model.

The torque generation model may for instance be implemented by a mathematical model of PMSM motors with two stator phases.

The two-phase mathematical model of the motor may be developed by considering a symmetrical structure for the PMSM, where the number of turns per each phase is the same for all the phases and the rotor is without skew topology.

The following main assumptions may be made:
i) the motor has two stator phases;
ii) only the fundamental harmonic of the magnetomotive force, MMF, is taken into account;
iii) anisotropy effects, magnetic saturation of ferromagnetic circuit, iron loses because of Hysteresis effect and Eddy currents are taking in consideration by a cumulative total efficiency factor;
iv) thermal effect for the permanent magnets and reactances are omitted; only the coil resistances are considered to vary with temperature.

The torque generation model may for instance be implemented by using equations in the static frame reference for SPMSM with two axes A, B.

The torque generation model may for instance be implemented by using a motion equation.

Considering that some of the electromagnetic losses, such as Hysteresis and Eddy currents losses will be concentrated in the value of the efficiency factor of the electric motor, the equation of motion may be focused on electromagnetic torque, inertial torque, friction torque, and load torque.

In other words, the electromagnetic torque may be defined as a sum of the inertial torque, the friction torque, and the load torque.

The torque generation model may for instance be implemented by using SPMSM equations in the rotating frame reference, for instance for the case of asymmetrical and/or unbalanced systems.

By the transformation of the static reference frame to the rotating frame, the phase quantities in terms of currents, voltages and flux linkages will all become constants, which is analogous to a DC motor model. In order to achieve rotating frame reference, phase quantities may be transformed.

The torque generation model may for instance be implemented by using a reverse park transformation.

In order to achieve the static frame reference phase quantities in terms of currents, voltages and flux linkages for each of the two stator phases, a reverse park transformation may be applied.

Fig. 7 shows another sketch of the method for controlling a multiphase motor for a vehicle according to an exemplary embodiment of the present invention.

The method for controlling a multiphase motor for a vehicle, may comprise the following steps:
As a first step of the method, detecting S1 a converter failure and providing a fault signal in case the converter failure is detected may be performed.

As a second step of the method, generating S2 a command vector used for controlling the multiphase motor and receiving the fault signal and adjusting the generated command vector based on the received fault signal may be performed.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

## Claims

1. Device (100) for controlling a multiphase motor for a vehicle, the device (100) is configured to be coupled to a converter, the device comprising:
- a sensor (10), which is configured to detect a converter failure and to provide a fault signal in case the converter failure is detected;
- a processor (20), which is configured to generate a command vector used for controlling the multiphase motor and which is configured to receive the fault signal sent by the sensor (10) and which is configured to adjust the generated command vector based on the received fault signal.

2. The device (100) according to claim 1,
wherein the sensor (10) is configured to provide the fault signal comprising torque balancing information about a reduced torque generation of the multiphase motor due to the converter failure.

3. The device according to claim 2,
wherein the processor (20) is configured to adjust the generated command vector based on the received fault signal and based on the received torque balancing information.

4. The device according to claim 3,
wherein the processor (20) is configured to adjust the generated command vector based on the received fault signal and based on the received torque balancing information using a torque generation model of the multiphase motor.

5. The device according to any one of the preceding claims,
wherein the processor (20) is configured to provide at least two shut off paths for the converter based on the received fault signal.

6. The device according to claim 5,
wherein the processor (20) is configured to provide the at least two shut off paths in terms of two shut off paths connected in series, on which, preferably, shut-off control blocks are sequentially executed.

7. The device according to claim 5 or 6,
wherein the processor (20) is configured to provide the at least two shut off paths in terms of two low current shut off paths.

8. The device according to any one of the preceding claims,
wherein the sensor (10) is configured to detect the converter failure in terms of a +DC-link-failure of operating conditions, or in terms of a motor failure or in terms of stuck-at GND failure, or in terms of short-circuit between phases, or in terms of an open phase failure.

9. The device according to any one of the preceding claims,
wherein the device (100) is configured to control a two phase motor as the multiphase motor.

10. A method for controlling a multiphase motor for a vehicle, the method comprising the following steps of:
- detecting (S1) a converter failure and providing a fault signal in case the converter failure is detected;
- generating (S2) a command vector used for controlling the multiphase motor and receiving the fault signal and adjusting the generated command vector based on the received fault signal.
